# EUROPEAN PATENT APPLICATION

(11) **EP 1 895 305 A1**
(43) Date of publication of application: **05.03.2008**
(21) Application number: 06746464.4
(22) Date of filing: 16.05.2006
(51) Int. Cl.: G01N 35/00, G01N 35/02

(54) **CONNECTED REAGENT CONTAINER**

(30) Priority: 17.05.2005 JP 2005143570
(71) Applicant: Wako Pure Chemical Industries, Ltd., Osaka-shi, Osaka 540-8605 (JP)
(72) Inventor: KOMIYAMA, Hishiri, WAKO PURE CHEMICAL INDUS. LTD, Amagasaki-shi, Hyogo 6610963 (JP); MAEDA, Shinji, WAKO PURE CHEMICAL INDUS. LTD, Amagasaki-shi, Hyogo 6610963 (JP); SASAKI, Keiko, WAKO PURE CHEMICAL INDUS. LTD, Mie-gun Mie 5101222 (JP); TANIMOTO, Kazuhito, WAKO PURE CHEMICAL INDUS. LTD, Osaka-shi Osaka 5408605 (JP)
(74) Representative: Jung Schirdewahn Grünberg Schneider
(86) International application number: PCT/JP2006/309750
(87) International publication number: WO 2006/123660

(57) **Abstract**

Provided are the connected reagent containers for an autoanalyzer, which prevent wrong combination of plurality of reagents including a standard or a control, and eliminate the work for combining reagents for analysis. Plurality of containers are standable separately each other and are connected with each other with an opening portion thereeach up so as to be detachable and standable as the connected reagent containers, thereby forming the connected reagent containers for the autoanalyzer to have reagents for analyzing the same analytical item therein, and a small container to have a reagent therein is held on a step or a concave portion formed at a shoulder portion of any of the connected reagent containers.

## Description

### Technical Field

The present invention relates to connected reagent containers for an autoanalyzer, wherein plurality of reagent containers containing the respective reagents, including a standard or a control, used to the same analytical item are arranged so as thereeach to be separately standable, and so as to be detachably connected with each other, which reagent containers are separately manufactured and are integrated together when selling, storing, and using them, thereby preventing wrong reagent combinations and eliminating reagents-combining work in analyzing step.

### Background Art

In the related art, each of the reagents for autoanalysis is stored in each separate container, and a necessary reagent container is selected to match every analytical item in use. Since, however, an autoanalyzer deals with several tens of analytical items, the selection to prepare necessary reagents for each analysis is a very troublesome work. Furthermore, when plurality of reagent containers are used for each analytical item, there are possibilities of wrong combinations on placing the reagent containers in the autoanalyzer, and of wrong storage place for the reagent containers when taken out and put away after the analysis.

To solve the above problems, there is a known reagent container of cassette type, which cassette contains reagent containers for the same analytical item.

The cassette type reagent container has, however, a drawback of trouble of placing the respective reagent containers in a cassette and increasing in manufacturing cost owing to the necessity for surplus cassette containers. Furthermore, since conventionally the reagents and a standard are controlled separately, the standard is not contained in the cassette. That is, the standard is not handled in the standard container but is transferred into a separate container, and is then set in the sample disk similar to the sample, not set in the reagent storage.

The Design Registration Nos. 1211571 and 1211767 disclosed reagent containers detachably connecting two containers in a rectangular shape, containing the respective two kinds of reagents therein. The disclosed containers, however, are applicable only in the case that the standard is set in the sample disk similar to the sample, not in the reagent storage, or that the standard is not used.

In autoanalyzers of the related art, it is necessary to set (input) the conditions necessary in analysis in the analyzer, and the analyzer is performed by the conditions in the analyzer set, (input) in accordance with the analytical conditions even after starting the analysis. Consequently, there is no practical autoanalyzer which automatically performs analysis only by pressing the start button.

JP-T-2006-501437, (the term "JP-T" referred to herein signifies the "Published No. of Japanese translation of PCT application"), discloses a multi-reagent pack which contains plurality of reagent sections and further contains a read/write memory chip which stores data relating to a specific test protocol that determines a specific reagent in the reagent sections.

The publication, however, does not disclose or suggest the technical concept of connecting an IC tag to the connected reagent containers containing the standard and the like for the same analytical item, thus allowing automatic analysis only by pressing the start button, and also of determining the effectiveness of analytical result through alteration of reagent and a difference between analyzers, and the like.
Patent Document 1: Design Registration No. 1211571
Patent Document 2: Design Registration No. 1211767
Patent Document 3: JP-T-2006-501437

### Disclosure of the Invention

### Problems to be Solved by the Invention

An aspect of the present invention described in claim 1 has an object of providing the connected reagent containers for the autoanalyzer, which connected reagent containers prevent wrong combination of plurality of reagents including the standard and the control, and eliminate the work of combining reagents for analysis.

Another aspect of the present invention described in claim 9 has an object of providing the connected reagent containers for the autoanalyzer, in which connected reagent containers, the bottom face portion being opposed to the opening portion of each container is lowered from other bottom face portions thereof, thereby bringing the contained reagent effectively into use, and the respective reagent containers before connected and the connected reagent containers after connected are formed not to easily fall down.

A further aspect of the present invention described in claim 10 has an object of providing the connected reagent containers for the autoanalyzer, which allows automatic setting of conditions necessary in analysis, and allows automatic analysis based on tag information even after starting the analysis.

### Means for Solving the Problems

An aspect of the present invention described in claim 1 to achieve the above objects is the connected reagent containers for the autoanalyzer, which containers are composed of plurality of containers which are standable separately from each other, said containers being connected with each other with an opening portion thereeach up so as to be detachable and standable as the connected reagent containers, thereby forming the connected reagent containers for the autoanalyzer to have reagents for analyzing a same analytical item, therein, and a small container to have a standard reagent therein, said small container being held on a step or a concave portion is formed at a shoulder portion of any of the connected reagent containers.

It is preferable that the small container to have the standard reagent or the like therein is placed on a bottom face of the step of the connected reagent containers, and is held thereon using a clip-shaped elastic member which detachably clamps both side portions of a standing face from the bottom face of the step, (claim 2).

Furthermore, it is preferable that the clip-shaped member is formed by a sheet made of a hard material such as a hard plastic material into a nearly angular U-shape widening toward the opening portion thereof, thereby allowing a fitting-projection formed at inside of front end of the opening portion to be able to fit into fitting-concave portions on both side portions of the standing face, (claim 3).

It is preferable that each reagent containers is formed in a nearly trapezoidal cross section shape, the connected reagent containers are formed by connecting the reagent containers and the bottom face shape of the connected the reagent containers is formed in totally a nearly wedge shape, and a step is formed at a shoulder of the front reagent container located at the end of the tapering portion of the wedge shape, thus allowing the step to hold the small container, (claim 4).

It is preferable that the opening portions of all reagent containers are positioned at the same or a close height thereeach, and the opening portions of all reagent containers are arranged in a single straight line to make the suction and discharge of reagent easy during the analysis, (claim 5).

It is suitable that the small container has a standard or a control, (claim 6). When the standard or the control is in a freeze-dry state, it is preferable that the small container is made of glass, (claim 7).

It is preferable that the bottom face portions of the respective pluralities of reagent containers being opposed to the top opening portions thereof are lowered from other bottom face portions thereof to use the reagents with very little quantity remaining in the reagent containers, (claim 8).

It is preferable that the bottom faces of the reagent containers are formed so as the shape established by connecting the bottom face portion lowered from other bottom face portions and a leg portion formed on the other bottom face portions to form a nearly triangular shape because the configuration allows the respective reagent containers before connected and the connected reagent containers after connected not to easily fall down and to stand up even when the bottom face portion being opposed to the opening portion is lowered from other bottom face portions, (claim 9). In particular, it is effective to establish the bottom face supporting portion in a nearly triangular shape for size-reduction of the autoanalyzer.

When the connected reagent containers have an IC tag containing a memory to store information relating to the reagents in the plurality of reagent containers, conditions necessary for analysis can be automatically set, and automatic analysis can be conducted after starting the analysis, (claim 10).

It is preferable that the IC tag stores information relating to display, (claim 11), information relating to analytical conditions, (claim 12), and information relating to analytical result, (claim 13).

The reagent containers have the respective reagents. The reagents are not specifically limited as long as the reagents become liquid at the time of use, (for example, in a freeze-dry state, etc.), by adding a liquid or a solvent thereto. In particular, the present invention is useful for (preparation-free) liquid reagents which do not need additional preparation before use.

### Effect of the Invention

According to an aspect of the present invention described in claim 1, the plurality of reagent containers for the reagents including the standard, the control, and the like, used to the same analytical item, which the reagent containers are separately manufactured, are formed so as to be standable without easily falling down in separate state before being connected each other. Accordingly, each of reagent containers prevents a fall during the manufacturing process. In addition, since the plurality of reagent containers are detachably connected each other, they prevent wrong combinations of plurality of reagents and eliminates the work of combining reagents for analysis. Furthermore, setting the integrated reagents needs only once. Thus the analytical operation becomes easy. For the preparation of integrated reagents, a reagent label may be attached to the connected plurality of reagent containers so as to cover the connections therebetween (all or a part of the connections) to prevent easy detachment of thus connected reagent containers after connecting the plurality of reagent containers. The configuration prevents accidental change of the delivered combination of reagent containers by the user.

According to an aspect of the present invention described in claim 2, the small container can easily and stably be held.

Normally the reagent container is formed of a relatively soft material. Therefore, holding a small container in a concave portion or the like formed on that soft reagent container may make it difficult to establish accurate positioning of the small container. To this point, however, if the clip is formed of a hard material such as hard plastic material, the small container can be firmly held even if the reagent container is made of a soft material, and can keep an accurate positioning.

According to an aspect of the present invention described in claim 9, when the bottom face portion being opposed to the opening portion of the reagent container is lowered from other bottom face portions thereof, a three-point support is established to make the container not easily fall down.

According to an aspect of the invention described in claim 10, conditions necessary for analysis can be automatically set (automatically input), thus the analyzer continues automatic operation from the beginning to the end of the analysis based on the tag information.

### Brief Description of the Drawings

Fig. 1 shows a side view of an example of the present invention.
Fig. 2 shows the plan view of Fig. 1.
Fig. 3 shows the plan view of a clip according to the present invention.
Fig. 4 is the bottom view of Fig. 1.
Fig. 5 is a perspective view of another example of the present invention.
Fig. 6 illustrates a connection type of the reagent containers according to the present invention.
Fig. 7 is a perspective view of a connection type of the reagent containers according to the present invention.
Fig. 8 is a perspective view of a connection type of the reagent containers according to the present invention.

### Description of the Reference Symbols

- 1: first reagent container
- 2: second reagent container
- 3, 3': fitting-projection
- 4, 4': fitting-hole
- 6: small container (small reagent bottle)
- 7: clip
- 9': bottom face of the second reagent container lowered from other bottom face portions thereof
- 9: bottom face of the first reagent container lowered from other bottom face portions thereof
- 10: leg portion at lower end of the connection of the second reagent container
- 11: leg portion at lower end of the connection of the first reagent container
- 16: IC tag

### Best Modes for Carrying Out the Invention

The embodiments of the present invention are described below referring to the drawings. Hereinafter, the container containing the first reagent is referred to as the first reagent container, and the container containing the second reagent is referred to as the second reagent container.

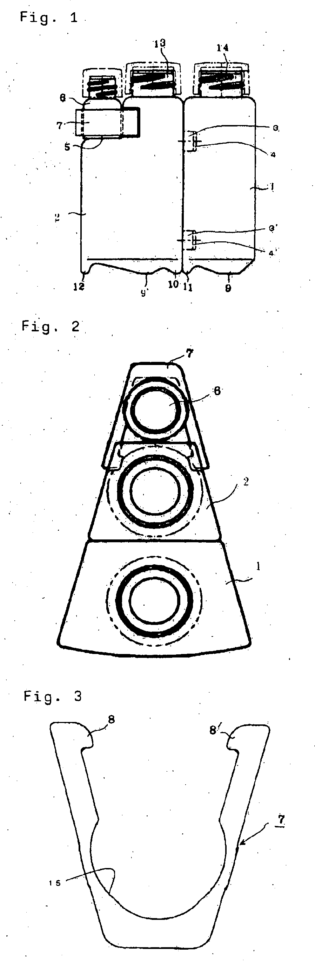

Fig. 1 and Fig. 2 show an example of the present invention. A first reagent container (first reagent bottle) 1 which is in a vertically thin shape having a nearly trapezoidal cross section and a second reagent container (second reagent bottle) 2 which is in a vertically thin shape having a nearly trapezoidal cross section are detachably fit to connect with each other by fitting fitting-projections 3 and 3' formed on the bottom face (connection face) of the trapezoid of the second reagent container 2 with fitting-holes 4 and 4' formed on the top face (connection face) of the trapezoid of the first reagent container 1, respectively, thus forming the connected containers in a nearly fan shape. A small vessel (small reagent bottle) 6 for a standard and the like is placed on a bottom face 5 of a step formed at front end of the connected containers. A clip 7 having elasticity being formed by folding a sheet in a nearly angular U-shape widened toward the opening portion thereof, shown in Fig. 3, is attached so as to flexibly clip both side portions of a standing face from the bottom face 5, thus to hold the small container 6. The inner circumferential surface of the clip 7 at the portion to clip the small container is formed in half-cylindrical shape 15 to closely attach to the small container. At both side portions of the standing face, there are formed the respective concave portions to which the respective convex portions 8 and 8' formed inside the front end of the clip fit. The small container 6 can contain a control, a calibrator, a third reagent, a concentrated reagent (such as freeze-dry reagent and liquid reagent concentrated to higher level than that for use), along with the standard. When concentrated reagent or the like is contained in the small container, any of the first reagent container and the second reagent container may contains a diluent, a dissolving liquid, and the like for the concentrated reagent.

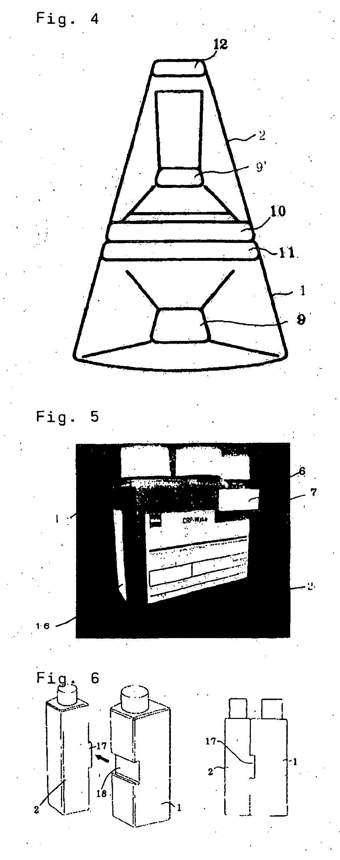

As shown in Fig. 1 and Fig. 4, bottom face portions 9 and 9' being opposed to top opening portions 14 and 13 of the first reagent container 1 and the second reagent container 2, respectively, are formed lowering from other bottom face portions thereeach. At the lower end of the connection, leg portions 11 and 10 in convex strip shape are located. Thus, the shape established by connecting the bottom face portion 9 lowered from other bottom face portions with the leg portion 11 at lower end of the connection, and the shape established by connecting the bottom face portion 9'lowered from other bottom face portions with the leg portion 10 at lower end of the connection are formed, respectively, in a nearly triangular shape. That is, each of the first reagent container 1 and the second reagent container 2 is supported by a triangular supporting face so that the independent standing ability improves. As a result, during the manufacturing process, the reagents can be readily and separately filled in the respective first reagent container 1 and the second reagent container 2.

Although in the above example the leg portions 10 and 11 are formed in a convex strip shape at the lower end of the connection, they are required only to form at a bottom face portion other than the bottom face portion being opposed to the top opening portion. For example, the leg portions may be formed as a projection at the bottom face of each side of the connection. Also the projection establishes a triangle between both the projections and the bottom face portions 9' and 9 lowered from other bottom face portions, which creates a three-point support.

A convex strip 12 is formed at lower face of end of the tapering portion of the second reagent container 2, thereby establishing a nearly triangular shape connecting the convex strip 12 with the bottom face portion 9' lowered from other bottom face portions.

To form the bottom face portion being opposed to the top opening portion of the respective first reagent container 1 and second reagent container 2 as the bottom face portions 9' and 9 lowered from other bottom face portions of the respective containers is to reduce the reagent loss by enabling the probe to suck up the reagent even when the quantity of reagent in the container becomes small. Although the lowered bottom portion makes the reagent container easily fall down, the above configuration of forming a triangular support face makes the reagent container not easily fall down.

According to the above example, the connected reagent bottles (connected reagent containers) are formed in a nearly wedge cross section (for example, nearly fan shape, nearly trapezoidal shape, and nearly triangular shape). The shape is selected on the basis that the reagent storage is formed in a circular shape, and the nearly wedge shape in cross section is selected relating to the circular shape of the reagent storage. By forming the connected position of the small container 6 for the standard and the like at the shoulder portion of end of the tapering portion, the connected reagent containers in a nearly wedge shape in cross section are readily formed.

The opening portions of all reagent containers are positioned at the same or a close height thereeach, and the opening portions of all reagent containers are arranged in a single straight line. Although the arrangement is not an essential requirement, the arrangement maximizes the capacity of the containers without loss of space, and makes the work to suck reagent by a probe easy.

Normally the small container 6 for the standard and the like contains the reference, a control, or the like. In that case, the small container 6 for the reference and the like is designed in small capacity to become empty when other reagents are used up. When a reagent (standard, control, or the like) as a freeze-dry product is used, the freeze-dry product can be surely and promptly dissolved by pouring hot water (about 37°C) thereinto using a pipetter on the analyzer.

Although the clip 7 may not be used, and similar method applied to the first reagent container 1 and the second reagent container 2 may be used to fit to connect the small container 6, use of the clip 7 is preferred to assure stable holding thereof. If the standard is in a freeze-dry state, a glass bottle is used. For glass bottles, use of the clip 7 is specifically preferred.

To connect plurality of reagent containers in detachable and standable state, the other method shown in Figs. 6 to 8 or other known method can be used. From the point of manufacturing cost, however, the detachable fitting-connection of the fitting-projection with the fitting-hole as in the above example is preferred. The shape of the fitting-projection and the fitting-hole may be in a nearly cylindrical shape or a nearly prism shape as in the above example, or the front end portion of the fitting-projection may be formed thicker to some extent and the inner portion of the fitting-hole may be formed to thicker than the opening portion to some extent. The number of the fitting-projections and of the fitting-holes may be one (a pair) or plural (plural pairs). Alternatively, as described in the above example, only the fitting-projection is formed on one of the reagent containers to be connected while forming only the fitting-hole on another reagent container, or both the fitting-projection and the fitting-hole may be formed on one of the reagent containers while forming the fitting-hole and the fitting-projection, corresponding to the respective counter fitting-projection and fitting-hole, on another reagent container.

Fig. 6 is an example in which the a convex strip 17 in nearly trapezoidal cross section positioning the bottom of the trapezoid at front end of the connecting direction, is formed on the reagent container 2, while forming a concave strip 18 in similar shape to that of the convex strip 17 on another reagent container 1, thereby fit-connecting both of the reagent containers sliding side faces each other. The example is to form the convex strip and the concave strip in horizontal direction, and to fit-connect the reagent containers by sliding their sides each other. Alternatively, the convex strip and the concave strip may be formed in vertical direction, and the reagent containers may be fit-connected by sliding them from upper face or from lower face. The number of the convex strips and of the concave strips may be one (a pair) or plural (plural pairs), and only the convex strip may be formed on one of the reagent containers to be connected while forming only the concave strip on another reagent container. Furthermore, both the convex container and the concave strip may be formed on one of the reagent containers while forming the convex strip and the concave strip, corresponding to the respective counter strips, on another reagent container.

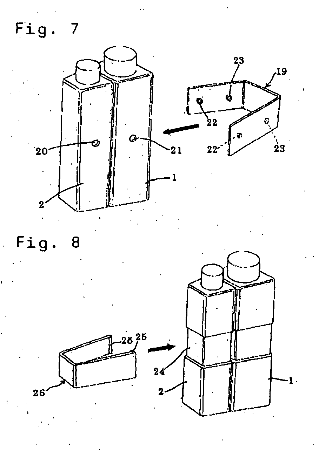

Fig. 7 shows an example in which fitting-concave holes 21 and 20 are formed on each side face of the first reagent container 1 and the second reagent container 2, and a nearly angular U-shaped connection member 19 on which fitting -projections 23 and 22, fitting the respective concave holes 21 and 22, are formed on inside face thereof, thereby fit- connecting both the reagent container 1 and 2 so as the projections 23 and 22 to fit the respective concave holes 21 and 20.

Fig. 8 shows an example in which a ring-shaped concave portion 24 is formed on outer circumference of the first reagent container 1 and on the second reagent container 2, and a nearly angular U-shaped clip 26 having a convex strip 25 at front end thereof being opposed to inward fits to connect at the concave portion 24.

Figs. 6 to 8 are only for illustrating the connection types of reagent containers, thus these figures do not show the step or the concave portion for holding the small container.

According to the example given in Fig. 1, two reagent containers are connected with each other, and the small container is placed at a shoulder portion of either one of the reagent containers, thus forming the connection of three reagent containers. Three or more reagent containers may be connected in series, and the number of reagent containers is not specifically limited as long as the reagent containers are for containing the reagents being used to the same analytical item.

Fig. 5 shows another example of the present invention, where a label 16 containing an IC tag is attached to the connected reagent containers.

An IC tag [it may be a non-contact IC (integrated circuit) tag such as RF (radio frequency) tag or a contact IC tag] containing a memory for storing information relating to the reagents in the plurality of reagent containers is connected (attached) to the containers which are structured by connecting the reagent containers containing the first reagent and the second reagent, respectively, with the small container containing a standard or the like according to the present invention, (hereinafter may be referred to simply as the "connected reagent containers"). By, for example, storing the information relating to the display, (unit, number of digits on display, standard value (range), and the like), in the IC tag, the setting and input work of user of the analyzer can be eliminated, and the analytical speed increases. In addition, by storing information relating to the analytical conditions in the IC tag, the setting and input work of user of the analyzer can be eliminated, and the analytical speed increases. Furthermore, for example, by storing the information relating to the analytical results in the IC tag, the control of reagents and analyzer becomes simple (automatic).

To store the information relating to the analytical conditions in the IC tag thus to improve the analytical speed, the following procedure may be applied.

The user of the analyzer sets the sample for analysis and the connected reagent containers onto the analyzer, and commands the start of the analysis (pushes the start button). On receiving the user command of analysis start, the analyzer automatically begins the analysis and automatically completes the analysis through the use of the information relating to the analytical conditions stored in the IC tag.

The procedure eliminates the necessity of user of the analyzer to input the information relating to the analytical conditions, and only by commanding the start of analysis (by pushing the start button), adequate analysis responding to each reagent and testingsample can be automatically begun and completed.

The information relating to the analytical conditions can not be defined because the information differs with the analytical item and the analyzing sample. These conditions include parameters (use amount of testingsample, use amount of reagent, timing to add each reagent, analyzing wavelength (single wavelength, double wavelength: main wavelength and sub-wavelength), reaction time, analysis point, reaction pattern (endpoint analysis, endpoint analysis subtracting the sample blank, two-items simultaneous endpoint analysis, continuous analysis of endpoint and rate, rate analysis subtracting the specimen blank, and the like)) as the conditions to operate the analyzer to perform the analysis, dilution condition (presence/absence of necessity for dilution of the sample, kind of diluent, and dilution rate), and calibration method.

The testingsample is the subject of the analysis, including a sample such as blood, urine and the like; a calibrator for calibration; and a control to confirm the result of calibration.

The method of calibration is data relating detail operations and conditions given on calibration. In concrete terms, the calibration method such as K-factor method, linear method, multipoint calibration curve method, and isozyme method; the calibration type (kind of calibration curve) such as linear equation (straight line), quadratic equation, spline curve, and Logit-log curve; the number of analyzing calibrators (standard solutions) (for example, if the number is 2, two kinds of calibrators are used); the value of the concentration of analyzing calibrator (standard solution); the number of analyses for the calibrator (for example, if the number is 3, three times of analysis are given to a single calibrator, and the measured value is normally expressed as the average of n=3) ; the optional information; and the like. The calibration is the operation conducting the calibration of measured values through the use of an apparatus and a reagent. The calibrator means a testing sample for conducting the calibration of measured values, which calibrator is also referred to as the " standard solution ". To give confirmation of the calibrated result, it is necessary to measure the control as the testing sample having a measured value within the standard range.

In addition, for example, when the control of reagents and analyzer is simply (automatically) conducted by storing the information relating to the analytical results in the IC tag, the following procedure may be applied.

In accordance with the above steps, once the analysis begins using the information relating to the analytical conditions stored in the IC tag, the information relating to the analytical results obtained by the analyzing procedure is stored in the IC tag which is connected (attached) to the reagent containers according to the present invention, then the analysis is completed based on the information relating to the analytical results and/or the information relating to the analytical conditions.

When the reagent containers (reagents) according to the present invention are used to the next analysis by storing the information relating to the analytical results in the IC tag connected (attached) to the reagent containers of the present invention, comparison between the stored information relating to the analytical results and the information relating to the analytical results being obtained in the next analysis can identify the detection of presence/absence of effectiveness of the next analytical results, presence/absence of abnormality, speculation of the cause of abnormality, and the correction of the difference between analyzers on the basis of the detection of difference between analyzers, and can identify the necessity of maintenance of analyzer. In addition, the comparison between the information relating to the obtained analytical results and the preliminarily-set threshold value data for the analytical result or the information relating to the analytical results in the next analysis makes it possible to predict the presence/absence of effectiveness of the next analytical results, the presence/absence of abnormality, and the cause of abnormality.

Even when the analyzer under use fails by some cause, and when a different analyzer has to be used to continue the analysis, if the IC tag attached to the reagent containers has the above-described information, there is no need of re-inputting the information retrieved from the failed analyzer into the new analyzer, and the comparison with the past data held in the reagent containers can be done.

The above-described information relating to the analytical results includes the environmental information (analyzer ID, analytical items, analyzing state, parameters used in the analysis, sample information for the analytical testing sample, (such as the inspection result for kind, tone, viscosity, and the like of the testing sample), cell blank in analysis (absorbance of sole cell used in analysis), information of reaction time course during analysis, and analytical results (measured values of the testing sample before calibration, measured values after the calibration, results of comparison with the standard value, and the like); performance information (such as analytical blank value, information of executed calibration, and information of results of control analysis), and the like.

By registering the information relating to the analytical results not only in the IC tag of the reagent containers but also in an analytical result data storage section which is controlled by a remote computer, the results of the analysis can be utilized, for example, to control other reagents relating to the reagents concerned.

Adding to the above-described information relating to the analytical conditions and the analytical results, when the IC tag stores, for example, information relating to the manufacture (manufacturing lot number, serial number, term of validity, and the like), information relating to the reagent performance, (calibration information (blank value in analysis, sensitivity, calibrator concentration, calibrator lot number, calibrated date, term of validity, calibration history, lot number and serial number of applied reagent), linearity, reproducibility, influence of coexisting substance, reaction time course (information of reaction progress, and information relating thereto), stability, threshold value data), and the like, the performance of the reagent can be determined, which allows readily (automatically) controlling the reagents. In addition, the information of availability and performance guarantee of the reagents can be attained when the IC tag stores the information relating to storing state (temperature, humidity, and vibration data, and required time for storage of the reagent); the transportation conditions (temperature, humidity, and vibration data, and required time for the reagent transportation); the information relating to the use conditions (such as the number of use-cycles, time of use, period of use, term of validity, quantity remaining, availability), and the like.

Furthermore, as disclosed in JP-A-2004-214695, (the term "JP-A" referred to herein signifies the "Unexamined Japanese Patent Publication"), when the above information is stored in the IC tag attached to the reagent containers of the present invention, and when an analyzer adequately connected to a network is used, for example, the automatic control of reagents and automatic judgment of effectiveness of the analysis are available, which then achieves efficient work by the user of the analyzer, and allows ordering reagents and maintenance of the analyzer. Thus the total analysis support is achieved.

As described above, an aspect of the present invention is that a single IC tag is connected (attached) to the containers of the present invention connecting (integrating) the reagent containers containing the first and the second reagents, respectively, with the small container containing standard solution or the like, which IC tag contains a memory to store the information relating to the reagents in the plurality of reagent containers, thereby allowing controlling all the reagents and supporting the analysis.

For example, when the above reagent control and analysis support are to be conducted to a combination of containers in which the conventional containers containing the respective first reagent and the second reagent and the small container containing the standard solution or the like, are not connected (integrated) each other, the IC tag may be connected (attached) to every container (of reagent and of standard solution). That case, however, raises problems of (1) to (3) described below. As of the plurality of containers, the IC tag may be attached only to a representative container. In that case, however, since the information in the IC tag and the reagents in the containers having no IC tag are not directly connected (linked), naturally the accurate reagent control and analysis support of the present invention become difficult.
(1) The necessary number of IC tags is the same number as that of the reagents and, if required, plus the container containing the standard solution.
   Only one IC tag is sufficient in the present invention. When, however, reagents in conventional containers which are not integrated together are used, it becomes difficult to carry out accurate the control of the reagent such as reagents, standard solution, and the like being contained in individual containers and obtain analysis support unless IC tag is connected (attached) to every container.
(2) The quantity of information stored in an IC tag increases.
   In conventional cases, reagents and the standard solution are separated from each other. Therefore, there is a need of information to identify the kind of reagent, which reagents and standard solution is containing in the container having the IC tag. In addition, there is a need to store the information relating to the manufacture, the information relating to storing state, the information relating to transportation conditions and use conditions, and the like in every IC tag.
   Furthermore, it is necessary to store the information relating to analytical conditions, analytical results, reagent performance, and the like in every IC tag or in a representative IC tag, while storing the information, which correlates the above IC tag with the IC tags not storing the information, in each IC tag.
(3) The flow of information between IC tag and analyzer or system becomes complicated.

As described above, since the quantity of information being stored in an IC tag increases, since the number of access points increases caused by using plurality of IC tags, or since the difference occurs in the information stored in plurality of IC tags, the number of access cycles between the IC tag and the analyzer or system increases, and the classification of information and the linking of information in the analyzer or system are required. Furthermore, on conducting access from the analyzer or system to the IC tag, the analyzer or system is required to judge to which IC tag among the plurality of IC tags the analyzer or system accesses, or to judge whether the analyzer or system has to access to all the IC tags, which the judgment work increases the load to the analyzer or system.

For example, Table 1 assumes a case that an IC tag is attached to each of the container containing the first reagent and the container containing the second reagent, (conventional configuration).

For the conventional configuration, there is a need of a tag for a second reagent bottle and a reader/writer 2, and further there is a need of a classification judgment 2 of the information at the analyzer (system) and a collection judgment 11 of information. The present invention, however, does not need them.

Table 1

## Claims

1. The reagent according to claim 1, which comprises;
a plurality of containers which are standable separately from each other, said containers being connected with each other with an opening portion thereeach up so as to be detachable and standable as the connected reagent containers, thereby forming the connected reagent containers for an autoanalyzer to have reagents for analyzing a same analytical item therein, and
a small container to have a reagent therein, said small container being held on a step or the concave portion formed at a shoulder portion of any of the connected reagent containers.

2. The connected reagent containers according to claim 1, wherein the small container to have the reagent therein is placed on a bottom face of the step of the connected reagent containers, and is held thereon using a clip-shaped elastic member which detachably clamps both side portions of a standing face from the bottom face of the step.

3. The connected reagent containers according to claim 2, wherein the clip-shaped member is formed by a sheet into a nearly angular U-shape widening toward the opening portion thereof, thereby allowing a fitting-projection formed at inside of front end of the opening portion to be able to fit into fitting-concave portions on both side portions of the standing face.

4. The connected reagent containers according to any of claims 1 to 3, wherein the connected reagent containers are formed by connecting the reagent containers each having nearly trapezoidal cross section shape and a bottom face shape of the connected reagent containers is formed in totally a nearly wedge shape, and the step is formed at a shoulder of the front reagent container located at the end of the tapering portion, thus allowing the step to hold the small container.

5. The connected reagent containers according to claim 4, wherein the opening portions of all reagent containers are positioned at the same or a close height thereeach, and the opening portions of all reagent containers are arranged in a single straight line.

6. The connected reagent containers according to claim 5, wherein the small container has a standard or a control.

7. The connected reagent containers according to claim 6, wherein the small container is made of glass.

8. The connected reagent containers according to claim 7, wherein bottom face portions of the respective reagent containers being opposed to the top opening portions thereof are lowered from other bottom face portions thereof.

9. The connected reagent containers according to claim 8, wherein the bottom faces of the reagent containers are formed so as the shape established by connecting the bottom face portion lowered from other bottom face portions and a leg portion formed on the other bottom face portions to form a nearly triangular shape.

10. The connected reagent containers according to any of claims 1 to 9, wherein the connected reagent containers have an IC tag containing a memory to store information relating to the reagents in the plurality of containers.

11. The connected reagent containers according to claim 10, wherein the IC tag stores information relating to display.

12. The connected reagent containers according to claim 10, wherein the IC tag stores information relating to analytical condition.

13. The connected reagent containers according to any of claims 10 to 12, wherein the IC tag stores information relating to analytical result.
